# EUROPEAN PATENT SPECIFICATION

(11) **EP 2 362 051 B1**
(45) Date of publication and mention of the grant of the patent: **28.11.2012**
(21) Application number: 10382044.5
(22) Date of filing: 25.02.2010
(51) Int. Cl.: E05F 15/16, F16H 25/24

(54) **Transmission system**
Übertragungssystem
Système de transmission

(43) Date of publication of application: 31.08.2011
(73) Proprietor: Grup Tecnoport Canet, S.L., 08360 Canet de Mar (ES)
(72) Inventor: Roca Iglesias, Jordi, 08360, CANET DE MAR (ES)
(74) Representative: Ponti Sales, Adelaida

(56) References cited:
- DE-C1- 19 617 877
- ES-U- 1 069 600
- US-A- 2 755 081
- US-A- 3 732 914

## Description

The present invention refers to a transmission system, particularly for sectional doors or movable ceilings, and also for curtains, and for any controlled linear traction guide.

### BACKGROUND OF THE INVENTION

It is known to use driving devices for sectional doors, e.g. for parkings, in which the aperture and closure of the sectional door is driven by a motor.

To this end, the driving device comprises a motor that drives the movement of a dragging plate along a guide placed along the ceiling of the place where the door is installed.

This dragging plate drags the door when moves along the guide, placing the door in its open or close position.

One drawback of the known driving devices is that they are very noisy, because the movement of the dragging plate along the guide is driven by chains or belts, with the corresponding vibrations.

Another drawback of this kind of devices is that the guide is very long, which makes its transportation and assembly difficult and expensive.

Therefore, it is apparent the need of a transmission system for doors, e.g. sectional doors, in which the use of chains and belts producing vibrations and noise is prevented.

To solve this drawbacks, the holder of the present application devised the driving device disclosed in the Spanish utility model ES-1069600, in which the guide is formed by modules and its driving mechanism does not comprise chains or belts, but it comprises a transmission system comprising a grooved screw and a rack, the movement between said screw and said rack being transmitted by a ball mechanism or by gears.

In the practice these transmission systems are too complex and its operation is not correct.

Therefore, the object of the present invention is to obtain a simple and reliable transmission system.

### SUMMARY OF THE INVENTION

With the transmission system of the invention said drawbacks can be solved, presenting other advantages that will be described.

The transmission system of the present invention defined in claim 1 comprises a grooved screw and a rack, and it is characterized in that it comprises an endless screw, the thread of said endless screw comprising a number of teeth meshed with said grooved screw and said rack, so that the rotation movement of said grooved screw is transmitted to the endless screw through the teeth of the thread and said endless screw moves longitudinally by its engagement with the rack.

Thanks to this feature, it is obtained a longitudinal dragging transmission system that is simple, quiet and reliable, because only the endless screw is placed between the grooved screw and the rack.

If the transmission system of the present invention is used for sectional doors, movable ceilings or equivalent ones, said endless screw is advantageously integral with a dragging plate, whose movement makes the door or any movable element to open or close, and said grooved screw is rotatable integral with the output axis of a motor.

If whished, said grooved screw and said rack can be housed inside a module of a section door guide. Therefore, it is obtained a guide from modules with reduced dimensions, which can be transported occupying a short longitudinal space.

### BRIEF DESCRIPTION OF THE DRAWINGS

For a better understanding of what has been disclosed, some drawings are attached in which, diagrammatically and only as a non-limitative example, a practical case of embodiment is shown.
Fig. 1 is a perspective view of a modular system for driving sectional doors, movable ceilings or the like;
Fig. 2 is a perspective view of the transmission device of the present invention; and
Fig. 3 is a cross-section view of the transmission device of the present invention.

### DESCRIPTION OF A PREFERRED EMBODIMENT

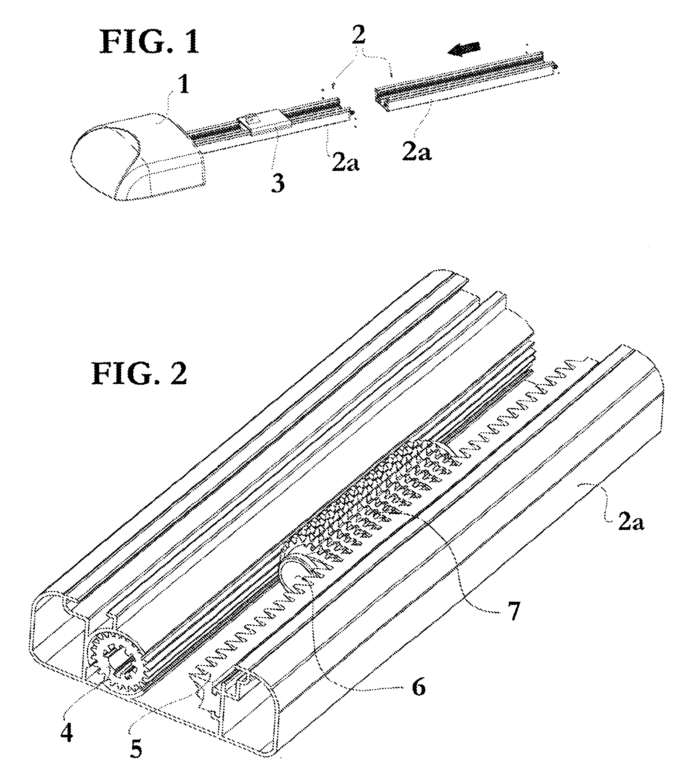

Fig. 1 shows a modular system for driving sectional doors or movable ceilings, in which the transmission system of the present invention can be applied. It must be pointed out that the transmission system of the present can also be applied in any controlled lineal traction guide system, e.g. for curtains.

In this figure, a guide 2 formed by a number of modules 2a engageable to each other are shown, along which a dragging plate 3 moves, driven by a motor 1.

It is necessary that the engagement between the different modules 2a to be carried out so that the movement of the dragging plate 3 is continuous.

In Fig. 2 is shown a module 2a that comprises the transmission system of the present invention.

The transmission system comprises a grooved screw 4 and a rack 5, between said groove screw 4 and said rack 5 being placed an endless screw 6 provided with a number of teeth 7 along its thread.

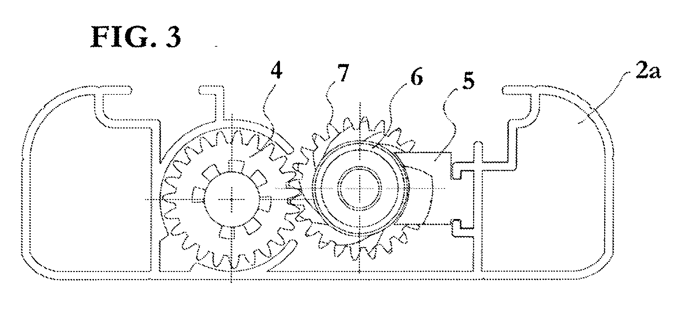

The teeth 7 of the thread of said endless screw 6 mesh with the teeth defined in said grooved screw 4, as shown in a greater detail in Fig. 3. On the other hand, the thread of the endless screw 6 meshes with the teeth of the track 5, which is fixed.

Therefore, when the motor 1 is driven, the rotation of its output axis rotates the grooved screw 4, which rotates the endless screw 6 and, consequently, moves along the guide 2 because it is meshed with said rack 5.

The movement of the endless screw 6 along the guide 2 also moves horizontally the dragging plate 3, so that opens or closes the door or ceiling.

The engagement of the different modules 2a forming the guide 2, and also the engagement of the grooved screws 4 is done conventionally, e.g. by a protrusion that snap houses inside a cavity, o by any suitable manner.

As stated previously, a transformation from the rotation movement at the output axis of the motor into a rectilinear movement is obtained, using a minimum use of elements and, at the same time, with the possibility of being a modular system.

Even though reference is made to a specific embodiment of the invention, it is apparent for a person skilled in the art that the disclosed transmission system is susceptible of numerous variations and modifications, and that all the details cited can be substituted by other technically equivalent ones, without departing from the scope of protection defined by the attached claims.

## Claims

1. Transmission system comprising a rotatable grooved screw (4) driveable by a motor, a fixed rack (5) and a gearing driven by the rotating grooved screw (4) engaging the fixed rack (5) such that the gearing moves longitudinally, **characterized in that** said gearing comprises an endless screw (6), the thread of said endless screw (6) including a number of teeth (7) meshing with the grooves defined in said grooved screw (4) and said thread of said end less screw (6) meshing with the teeth of said rack (5), so that the rotation movement of said grooved screw (4) is transmitted to the endless screw (6) through the teeth (7) of the thread and moves longitudinally said endless screw (6) by its engagement with the rack (5).

2. Transmission system according to claim 1, wherein said endless screw (6) is integral with a dragging plate (3), whose movement opens or closes a door.

3. Transmission system according to claim 1, wherein said grooved screw (4) is rotatably integral with the output axis of a motor (1).

4. Transmission system according to claim 1, wherein said grooved screw (4) and said rack (5) are housed inside a module (2a) of a guide (2) of a sectional door.

## Patentansprüche

1. Übertragungssystem mit einer drehbaren mit Nuten versehenen Schraube (4), die von einem Motor antreibbar ist, einer festen Leiste (5) und einem Getriebe, angetrieben durch die sich drehende mit Nuten versehene Schraube (4), die in Eingriff steht mit der feststehenden Leiste (5), derart, dass das Getriebe sich längsbewegt, **dadurch gekennzeichnet, dass** das Getriebe eine Endlosschraube (6) aufweist, wobei das Gewinde der Endlosschraube (6) eine Anzahl von Zähnen (7) umfasst, die mit den Nuten kämmen, die in der mit Nuten versehenen Schraube (4) ausgebildet sind, und dass das Gewinde der Endlosschraube (6) mit den Zähnen der Leiste (5) kämmt, so dass die Drehbewegung der mit Nuten versehenen Schraube (4) auf die Endlosschraube (6) über die Zähne (7) des Gewindes übertragen wird und die Endlosschraube (6) durch ihren Eingriff mit der Leiste (5) sich in Längsrichtung bewegt.

2. Übertragungssystem nach Anspruch 1, wobei die Endlosschraube (6) einstückig mit einer Ziehplatte (3) ist, deren Bewegung eine Tür öffnet oder schließt.

3. Übertragungssystem nach Anspruch 1, wobei die mit Nuten versehene Schraube (4) in Drehbewegung integral mit der Ausgangsachse eines Motors (1) ist.

4. Übertragungssystem nach Anspruch 1, wobei die mit Nuten versehene Schraube (4) und die Leiste (5) in einem Modul (2a) einer Führung (2) einer gegliederten Tür aufgenommen ist.

## Revendications

1. Système de transmission comprenant une vis rainurée rotative (4) pouvant être entraînée par un moteur, une crémaillère fixée (5) et un engrenage entraîné par la vis rainurée rotative (4) venant en prise avec la crémaillère fixée (5) de sorte que l'engrenage se déplace longitudinalement, **caractérisé en ce que** l'engrenage est constituéd'une vis sans fin (6), le filetage de la vis sans fin (6) comprenant plusieurs dents (7) engrenant avec les rainures définies dans la vis rainurée (4) et le filetage de la vis sans fin (6) engrenant avec les dents de la crémaillère (5), de sorte que le mouvement de rotation de la vis rainurée (4), est transmis à la vis sans fin (6) par l'intermédiaire des dents (7) du filetage et déplace longitudinalement la vis sans fin (6) par son engrènement avec la crémaillère (5).

2. Système de transmission selon la revendication 1, dans lequel la vis sans fin (6) est d'un seul bloc avec une plaque d'entraînement (3), dont le déplacement ouvre ou ferme une porte.

3. Système de transmission selon la revendication 1, dans lequel la vis rainurée (4) est rotative d'un seul tenant avec l'axe de sortie d'un moteur (1).

4. Transmission selon la revendication 1, dans lequel la vis rainurée (4) et la crémaillère (5) sont reçues à l'intérieur d'un module (2a) d'un guide (2) d'une porte sectionnelle.
